# FASCICULE DE BREVET EUROPEEN

(11) **EP 2 274 882 B1**
(45) Date de publication et mention de la délivrance du brevet: **23.05.2012**
(21) Numéro de dépôt: 09729398.9
(22) Date de dépôt: 20.03.2009
(51) Int. Cl.: G06Q 30/00, H04M 3/487, G06Q 10/00, H04L 12/58

(54) **PROCEDE DE TRANSMISSION DE MESSAGE, DISPOSITIF ET PRODUIT PROGRAMME D'ORDINATEUR CORRESPONDANTS**
VERFAHREN ZUM SENDEN EINER NACHRICHT UND ENTSPRECHENDE EINRICHTUNG UND COMPUTERPROGRAMMPRODUKT
METHOD OF TRANSMITTING A MESSAGE, AND CORRESPONDING DEVICE AND COMPUTER PROGRAM PRODUCT

(30) Priorité: 20.03.2008 FR 0851826
(43) Date de publication de la demande: 19.01.2011
(73) Titulaire: FRANCE TELECOM, 75015 Paris (FR)
(72) Inventeur: BOUCHACOURT, Alexandre, F-92100 Boulogne Billancourt (FR); OTTAVI, Alain, F-14000 Caen (FR); LANCIERI, Luigi, F-14210 Evrecy (FR)
(74) Mandataire: Le Saux, Gaël
(86) Numéro de dépôt international: PCT/FR2009/050487
(87) Numéro de publication internationale: WO 2009/125112

(56) Documents cités:
- US-A- 6 009 150
- US-A1- 2003 046 151
- US-A1- 2007 192 428
- US-A1- 2008 004 954

## Description

### 1 DOMAINE DE L'INVENTION

La présente invention se rapporte au domaine des communications personnelles.

La présente invention se rapporte plus particulièrement à la gestion des événements qui jalonnent une communication.

### 2 SOLUTIONS DE L'ART ANTERIEUR

L'avènement de l'Internet a entraîné un développement exponentiel des possibilités de communication. Il est désormais très courant de communiquer par messagerie instantanée, par messagerie électronique, à l'aide de messages courts ou multimédia (SMS ou MMS) tout autant que de communiquer à l'aide de la parole ou à l'aide de moyens visiophoniques.

Dans l'état actuel des connaissances, il est courant de disposer de systèmes permettant de savoir si un terminal d'un utilisateur est allumé ou qu'une session de communication est ouverte (par exemple une session de communication de messagerie instantanée ou une conversation vocale).

Il existe également des mécanismes qui permettent de se renseigner sur la présence ou sur l'absence, soit plus généralement sur la disponibilité, d'un utilisateur derrière son terminal, mais de tels mécanismes sont particulièrement intrusifs et souvent rejetés par les utilisateurs. Ainsi, des logiciels d'analyse tels que les « keyloggers » ou les « mouseloggers » qui sont des logiciels d'analyse des actions des utilisateurs au clavier ou à la souris, permettent de se renseigner sur l'activité de l'utilisateur, mais de tels logiciels sont souvent désinstallés par ces mêmes utilisateurs car ils empiètent sur la vie privée.

De plus, un opérateur ou un fournisseur de service qui souhaite mettre en oeuvre un tel logiciel d'analyse est confronté à des problématiques de gestion de l'environnement d'exécution de ce logiciel et des problématiques de gestion des systèmes d'exploitation employés sur les terminaux de sorte qu'un logiciel d'analyse spécifique doit être développé pour chaque plateforme sur laquelle le service de suivi de l'utilisateur doit être mis en oeuvre. Ainsi, l'utilisation de logiciel d'analyse de traces installé chez l'utilisateur n'est pas adaptée.

Cependant, il existe des situations dans lesquelles une détection d'activité ou à tout le moins de présence d'un utilisateur peut être nécessaire à la mise en oeuvre de services spécifiques à destination de ce dernier. Il n'existe pas à l'heure actuelle, de système efficace de détection de l'activité.

Il existe en revanche des systèmes de détection de l'inactivité d'un utilisateur sur un ou plusieurs de ses terminaux de communication (tels que des écrans de veille). Il s'avère cependant relativement peu intéressant dans la majorité des cas de savoir que l'utilisateur ne fait rien ou est absent, surtout lorsqu'un tel utilisateur représente une cible commerciale ou publicitaire (ou sécuritaire).

En effet, en cas d'inactivité ou d'absence d'un utilisateur sur son terminal PC, ou bien sur tout autre terminal de communication connecté à un réseau de communication, il y aura alors peu de chance cet utilisateur soit réceptif à des informations qui pourraient lui être affichées, par exemple du type informations publicitaires ciblées.

En outre, les mécanismes d'affichage d'informations diverses, sous la forme de fenêtres de type « pop-up » apparaissant automatiquement sur l'écran des utilisateurs sont généralement mal perçus par ces derniers, car souvent considérés comme intrusifs et donc de plus en plus souvent bloqués par les navigateurs qui intègrent des systèmes de détection de « pop-up ».

Le document Le document D1 (GOLDFARB, (US 2007/192428)) présente une méthode permettant de lancer la visualisation d'un clip audio et/ou vidéo notamment à la fin de la communication entre deux utilisateurs. Ce contenu audio ou vidéo peut avoir été préalablement téléchargé sur l'un des terminaux des utilisateurs ou peut avoir été sélectionné par une des deux utilisateurs participant à la communication.

L'objet de D1 est de fournir un service de personnalisation identique au service CBRT (Callback Ringtone, qui permet aux utilisateurs de personnaliser l'accueil qui est réservé aux utilisateurs appelant) en permettant une personnalisation de la fin de la communication (Endtone). Ainsi, la technique de D1 permet à des utilisateurs (« buddy ») d'avoir l'illusion de partager, en temps réel, des contenus multimédia.

Le document D2 (KAMEL, (US 6 009 150)) présente une méthode dans laquelle l'utilisateur a la possibilité de se voir délivrer un message à caractère publicitaire durant une communication afin de maintenir la gratuité de celle-ci.

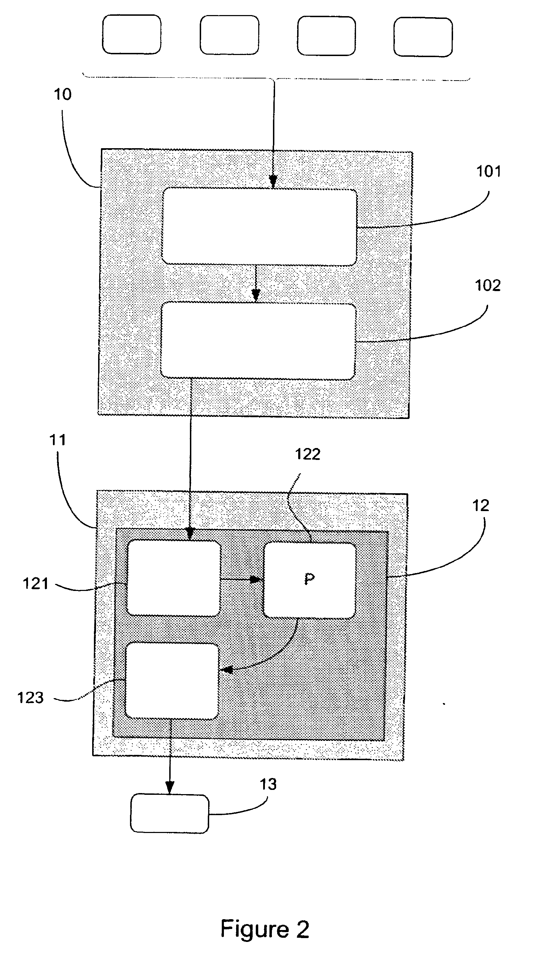

Selon D2, la période de gratuité de la communication est déterminée par le nombre de message publicitaire que l'utilisateur accepte d'entendre. Ainsi, arrivé à la fin de la période de gratuité, la méthode de D2 propose à l'utilisateur de réécouter un message commercial. Si l'utilisateur accepte, il peut poursuivre la communication entamée après la fin du message. S'il refuse, la communication est interrompue (figure 2D).

### 3 RESUME DE L'INVENTION

La solution proposée par l'invention ne présente pas ces inconvénients de l'art antérieur. Elle concerne en effet un procédé de transmission d'un message par une entité d'un réseau de communication et à destination d'au moins un terminal d'un utilisateur.

Selon l'invention, un tel procédé comprend :
- une étape d'analyse d'un ensemble de messages échangés dans une communication, ladite étape d'analyse délivrant au moins une information représentative d'une probabilité d'interruption de ladite communication ;
- une étape de délivrance dudit message audit terminal, si ladite probabilité est supérieure à un seuil prédéterminé.

Ainsi, à la différence des techniques de l'art antérieur qui ne permettent de détecter que la seule présence ou absence de l'utilisateur devant son terminal, l'invention permet de déterminer la disponibilité réelle de celui-ci à recevoir une information que l'on souhaite lui communiquer. L'invention propose une technique non intrusive basée sur une détection de la disponibilité réelle de l'utilisateur et ne nécessitant pas d'installation de logiciel spécifique. Elle se base uniquement sur l'analyse d'informations issues de flux de communication générés par un utilisateur dans une communication et par le biais du réseau de communication. Elle ne s'appuie pas, comme dans les techniques de l'art antérieur, sur l'obtention d'information relatives à ce qui est saisi au clavier du terminal ou ce qui est effectué à l'aide d'un système de pointage (« keylogger » ou « mouselogger »).

L'invention se base sur les informations obtenues pour déterminer une valeur probabiliste d'interruption ou de fin de communication. Cette valeur probabiliste est utilisée pour savoir si la communication prend fin ou a pris fin très récemment et ainsi anticiper une plus grande probabilité qu'un utilisateur soit disponible et donc plus réceptif à recevoir une information ciblée, par exemple du type publicitaire, ou du type information d'alerte de sécurité ou de vulnérabilité concernant le terminal de l'utilisateur.

Ainsi, l'information n'est fournie à l'utilisateur que lorsque la probabilité que sa communication se termine atteint ou dépasse un seuil prédéterminée. Le procédé de l'invention permet donc d'attendre un moment optimal pour fournir l'information, à savoir un moment où l'utilisateur sera le plus réceptif à cette information. La délivrance du message peut intervenir localement lorsque ce message est déjà présent au sein du terminal de l'utilisateur. La délivrance peut intervenir suite à la transmission du message par une entité distante.

L'invention permet donc d'éviter de noyer l'utilisateur sous une avalanche d'informations, principalement lorsqu'il est en communication. L'impact de l'information envoyée lors de la fin de la communication sera plus grand et l'information sera perçue comme moins gênante pour l'utilisateur.

Selon un mode de réalisation particulier de l'invention, ladite étape de délivrance tient compte également d'une information représentative d'un niveau de criticité dudit message.

Ainsi, outre la probabilité de la fin de la communication, la fourniture de l'information tient également compte d'une criticité de l'information, à savoir d'une dimension d'urgence/d'alerte de l'information à délivrer à l'utilisateur.

Ce caractère critique peut par exemple être exprimé par une valeur. Lorsque l'information à fournir à un caractère d'urgence, la valeur de fourniture prédéterminée tient compte de cette valeur et peut être abaissée. Par exemple, dans le cadre d'une alerte de sécurité, la valeur de fourniture prédéterminée peut être abaissée à 0,6. Ainsi, le procédé de l'invention fournira l'information à l'utilisateur dès que la probabilité de la fin de communication atteindra la valeur 0,6.

A l'inverse; dans le cas d'une information publicitaire, une telle valeur de fourniture prédéterminée pourra être portée à 0,9. Ainsi, l'information publicitaire ne sera fournie à l'utilisateur que lorsque la probabilité de la fin de la communication atteindra la valeur 0,9.

Selon une caractéristique particulière de l'invention, ladite étape d'analyse comprend :
- une étape d'obtention d'un ensemble d'informations représentatives d'au moins une séquence de messages échangés par ledit utilisateur dans ladite communication ;
- une étape d'analyse probabiliste desdites informations par comparaison avec au moins un modèle probabiliste de détection d'interruption de communication, de façon à obtenir ladite au moins une probabilité d'interruption de ladite communication.

Ainsi, l'invention permet de prendre en compte des modèles probabilistes adaptés à la détection d'interruption d'une fin de communication et donc, d'anticiper le cas échéant toute interruption ou fin d'une communication impliquant un utilisateur, de façon à lui transmettre une information ciblée de manière non intrusive en cours de communication, mais au contraire, une fois cette dernière interrompue ou terminée. Une telle approche s'avère donc plus adaptée à ce que l'utilisateur soit plus réceptif au contenu du message qui lui sera envoyé sur son terminal.

Selon un mode de réalisation particulier de l'invention, ledit au moins un modèle probabiliste tient compte d'au moins un paramètre appartenant au groupe comprenant au moins :
- un nombre de messages moyens échangés lors d'une communication ;
- une durée moyenne d'une communication ;
- un sens des messages d'une communication ;
- une évolution de la taille des messages échangés en cours de communication ;
- un temps écoulé entre deux messages d'une communication.

Ainsi, le modèle probabiliste de l'invention permet de détecter une interruption, ou une fin imminente d'une communication en se basant sur des paramètres d'analyse de cette dernière.

Selon une caractéristique particulière de l'invention, ladite étape de délivrance est mise en oeuvre par l'intermédiaire d'une application de messagerie instantanée et en ce que ledit message se présente sous la forme d'un message instantané.

Ainsi, dans ce mode de réalisation, l'invention renforce le caractère non intrusif de la fourniture d'information. Le message instantané peut être « expédié » en utilisant un contact virtuel de la messagerie instantanée pour fournir de l'information. L'utilisateur n'est donc pas détourné de son activité (à savoir l'utilisation de la messagerie instantanée) pour recevoir l'information. Du point de vue de l'utilisateur, cette information est transmise directement par un contact dédié à cet effet, au sein de la messagerie instantanée, à la fin de la communication qu'il avait en cours.

L'invention concerne également un dispositif de transmission d'un message par une entité d'un réseau de communication et à destination d'au moins un terminal d'un utilisateur.

Selon l'invention, un tel dispositif comprend :
- des moyens d'analyse d'un ensemble de messages échangés dans une communication, lesdits moyens d'analyse délivrant au moins une information représentative d'une probabilité d'interruption de ladite communication ;
- des moyens de délivrance dudit message audit terminal, si ladite probabilité est supérieure à un seuil prédéterminé.

Dans un autre de ses aspects, l'invention concerne un système de transmission d'un message vers un utilisateur d'un terminal, en provenance d'une entité d'un réseau de communication, caractérisé en ce qu'il comprend :
- des moyens d'analyse d'un ensemble de messages échangés dans une de communication, lesdits moyens d'analyse délivrant au moins une information représentative d'une probabilité d'interruption de ladite communication ;
- des moyens de délivrance dudit message audit terminal, si ladite probabilité est supérieure à un seuil prédéterminé.

Un autre aspect de l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de transmission de message tel que décrit précédemment.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une architecture de mise en oeuvre du procédé de l'invention ;
- la figure 2 illustre le procédé de l'invention au sein de l'architecture de la figure 1 ;
- la figure 3 décrit un dispositif de mise en oeuvre de l'invention.

### 5 DESCRIPTION DETAILLEE DE L'INVENTION

### 5.1 Rappel du principe de l'invention

L'invention propose donc d'utiliser et d'analyser les données de communication transmises ou reçues par un utilisateur pour s'assurer de sa disponibilité et, par voie de conséquence, de son éventuelle réceptivité à la fourniture d'informations. Ainsi, l'invention permet de soumettre à un utilisateur un message ou un service à un instant de présence physique réelle et de meilleure disponibilité, de façon à optimiser les chances que l'utilisateur puisse être intéressé par l'information qui lui est soumise et ainsi, à optimiser le ciblage d'information.

On rappelle que dans le contexte de l'invention, une communication est constituée d'un ensemble d'échanges d'au moins un message entre des utilisateurs, ces échanges de messages constituant une conversation.

Ce type de système s'inscrit dans une harmonie avec les cycles d'activités des utilisateurs et est essentiellement destiné à leur transmettre des informations au moment où ils seront normalement le plus disposés à les recevoir.

L'invention permet de détecter le meilleur moment de disponibilité d'un utilisateur en analysant le trafic des communications qu'il génère et en anticipant la fin de ses communications par l'intermédiaire d'un terminal de communication donné.

En effet, l'établissement et le déroulement d'une communication implique nécessairement l'utilisateur et requiert donc le plus souvent son attention.

L'invention se base sur ce principe pour qu'à la fin ou tout le moins lors d'une interruption d'une communication en cours, un utilisateur puisse recevoir et surtout être réceptif à une transmission automatique d'information ciblée en provenance d'un tiers.

L'information est fournie de manière non intrusive, par une entité du réseau de communication ou par un dispositif local délivrant l'information. Le délivrance de l'information est non intrusive car on attend la fin ou tout le moins une interruption temporaire d'une communication en cours pour transmettre à l'utilisateur une information ciblée (publicitaire, par exemple).

Dans un mode de réalisation particulier de l'invention, l'information est elle-même fournie sous la forme d'une communication, qui prend le relais de la communication dont on vient de détecter la fin. Cependant, il est nécessaire de détecter, d'une manière proactive, l'imminence de la fin d'une communication en cours pour pouvoir fournir l'information immédiatement après la fin de la communication (et avant que l'utilisateur ne passe à autre chose, c'est-à-dire avant qu'il n'entame une autre action).

L'information à transmettre à l'utilisateur peut avoir un caractère publicitaire ou encore un caractère sécuritaire.

Par exemple, dans le cadre d'une utilisation d'un ordinateur personnel, qui est soumis de manière générale à de nombreuses attaques, il peut être primordial d'avertir l'utilisateur de la disponibilité d'un correctif ou d'une vulnérabilité. Dans un autre cas de figure, par exemple dans le cadre professionnel, il peut être intéressant de ne pas submerger l'utilisateur d'informations et donc d'attendre la fin d'une communication pour fournir une information d'une autre nature. On exploite ainsi les moments de meilleure disponibilité à la réception de l'information contenue dans le message que l'on fait parvenir à l'utilisateur.

Pour exploiter ces moments de meilleure disponibilité, il est cependant nécessaire de les détecter, ce qui ne peut pas être réalisé à la fin de la communication, puisque l'utilisateur peut, entre le moment où la fin de la communication est détectée, et la fourniture de l'information, être passé à autre chose.

Le procédé de transmission selon l'invention apporte une solution nouvelle et inventive à ce problème en analysant les informations échangées au cours de la communication afin de détecter la fin probable d'une communication. En d'autres termes, l'invention détecte de façon proactive la fin de la communication et est à même de fournir l'information que l'on veut lui délivrer dès la fin de la communication, sans que la détection et la fourniture de l'information ne revêtent plus un caractère intrusif.

Par la suite, on présente notamment le cas d'une mise en oeuvre du procédé de transmission de l'invention par l'intermédiaire d'une application de messagerie instantanée. Il est clair cependant que l'invention ne se limite pas à cette application particulière, mais peut également être mise en oeuvre dans de nombreux autres domaines.

### 5.2 Description d'un mode de réalisation

On présente dans ce mode de réalisation, la mise en oeuvre du procédé de l'invention par l'intermédiaire d'une application de messagerie instantanée à laquelle l'utilisateur est connecté. Cette application de messagerie instantanée peut être mise en oeuvre dans le cadre de l'utilisation d'un ordinateur personnel ou de tout autre terminal de communication disposant de moyens de mise en oeuvre d'une telle application (terminaux mobiles de troisième génération, etc.).

Dans ce mode de réalisation, pour détecter le meilleur moment de disponibilité, le trafic de messagerie instantanée généré par un utilisateur est analysé et permet de prévoir les fins des communications de ce dernier. En effet, l'usage d'une application de messagerie instantanée requiert dans la très grande majorité des cas la présence et l'attention de l'utilisateur devant l'écran de son terminal. Le principe de l'invention étant d'envoyer une information à l'utilisateur au meilleur moment de disponibilité, il n'est donc pas suffisant par exemple de s'assurer de sa disponibilité en regardant les fins de communications téléphoniques comme cela est le cas des techniques de l'art antérieur (la présence devant l'écran n'étant plus assurée à ce moment-là).

Dans ce qui suit un message fait donc allusion à un message instantané (ou IM), et une communication correspond à un ensemble d'IM cohérents entre eux, c'est-à-dire qu'ils correspondent à une même conversation écrite.

Dans ce mode de réalisation, l'invention peut recevoir de nombreuses applications. Il existe néanmoins deux types principaux d'application de l'invention selon à qui elle s'adresse.

En entreprise, où l'usage de la messagerie instantanée professionnelle se développe, l'invention doit permettre de transmettre aux employés des messages d'information. On peut aussi, dans un souci de non interruption des communications, permettre l'envoi de messages instantanés différés entre collaborateurs. Il s'agit donc surtout dans le domaine professionnel d'exploiter le moment de meilleure disponibilité pour ne pas exposer les utilisateurs à la surinformation.

Dans le domaine grand public des messages à caractère publicitaire peuvent être envoyés aux utilisateurs de la manière la moins intrusive qui soit (c'est-à-dire pas pendant l'utilisation de la messagerie instantanée et avant le commencement d'une autre activité). Il s'agit donc surtout ici d'optimiser la probabilité de lecture de l'information contenue dans le message par un client potentiel ciblé.

### 5.2.1 Architecture générale

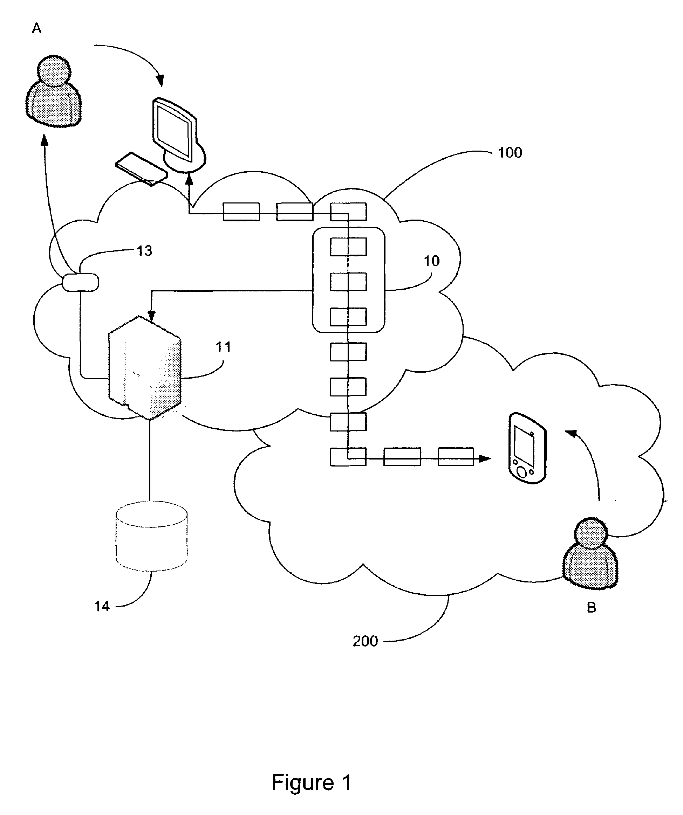

On présente, en relation avec la figure 1, une architecture de mise en oeuvre du procédé de l'invention.

Dans le cas d'un réseau 100 d'opérateur pour le grand public on place au coeur de ce réseau une sonde 10 permettant l'analyse du trafic de messages des utilisateurs de messagerie instantanée, tel que l'utilisateur A. Dans le cas d'un réseau d'entreprise il est possible de réaliser une analyse particulière sur un port de communication donné sur le commutateur adéquat.

Un utilisateur B est entré en communication avec l'utilisateur A. L'utilisateur B est par exemple client d'un autre réseau 200 d'opérateur.

Cette sonde 10 fait parvenir les données représentatives des communications (telles que des traces d'activités) à un serveur 11 en charge de l'analyse de ces données représentatives et du calcul de la fin probable de la communication (par exemple à l'aide de modèles enregistrés au sein d'une base de données 14). Dans ce mode de réalisation, ce serveur 11 est également en charge de la transmission du message 13 à l'utilisateur A dès la fin de la communication.

### 5.2.2 Procédé de détection et de transmission

On présente, en relation avec la figure 2, un mode de mise réalisation du procédé de l'invention dans l'architecture de la figure 1.

Dans ce mode de réalisation, la sonde 10 extrait (101) les données représentatives des communications qui sont des traces d'activité de messagerie instantanée et envoie (102) en continu ces traces d'activité au serveur 11 qui comprend un module 12 d'analyse de ces traces d'activités.

Pour ce faire, ce module 12 extrait (121) des traces d'activité les données pertinentes (comme par exemple la taille des messages, les temps écoulés entre des messages consécutifs) et à l'aide d'un modèle décisionnel préalablement construit par apprentissage (par exemple un réseau de neurones, un arbre de décision etc.) donne (122) la probabilité « P » qu'un message soit le dernier d'une communication.

Lorsque la probabilité atteint une valeur préalablement définie, Ce module 12 déclenche 123 l'envoi d'une information 13 à l'utilisateur disponible à partir. La valeur préalablement définie peut être définie comme un seuil de confiance de probabilité de fin de communication. Ce seuil peut dépendre de la nature de l'information, de son degré d'importance par exemple.

Dans ce mode de réalisation, l'envoi d'une d'information à l'utilisateur n'est pas trivial.

Dans une première variante, il peut être réalisé par l'envoi d'un Message Instantané IM (du texte simple, voire une URL). Un contact virtuel peut alors être au préalable ajouté au carnet de l'utilisateur de manière transparente et pourra donc envoyer ces messages à caractère informatif. Cette première variante présente l'avantage d'utiliser le même canal de communication que celui de l'utilisateur. Ainsi, lors de la fin de la communication, l'information est transmise directement dans la même application de messagerie instantanée.

Dans une deuxième variante, nécessitant l'installation d'une interface (légère) sur le poste client, les informations à envoyer peuvent s'afficher via des fenêtres surgissantes (avec un son et en arrière plan de l'application courante et/ou transparentes et disparaissant d'elles mêmes). Il est alors possible d'ajouter un système de contrôle de la visualisation de l'information pour vérifier la pertinence du moment de mise à disposition de l'information (par exemple en analysant les dates d'apparition et de fermeture de la fenêtre surgissante par rapport à sa date d'envoi).

### 5.3 détection/prédiction de fin de communication

L'invention permet de détecter qu'une communication en messagerie instantanée (IM) vient ou est sur le point de s'achever.

Alors qu'il est très simple de détecter les fins réelles de communications téléphoniques (à l'aide d'une signalisation de fin d'appel explicitement générée par le système), le problème n'est pas trivial dans un contexte de messagerie instantanée. Il présente même une complexité bien plus grande.

En effet une communication par messagerie instantanée est constituée d'un ensemble de messages tous datés, les uns indépendamment des autres. Il n'y a pas dans le cas de l'IM de signalisation de début et de fin de communication.

Dans un mode de réalisation de l'invention adapté à la messagerie instantanée, détecter une fin de communication revient à identifier le dernier message d'une communication.

Pour ce faire, dans ce mode de réalisation, l'invention se base sur un ou plusieurs modèles prédéfinis de fins de communication de messagerie instantanée préalablement construits.

Ces modèles sont préalablement construits par apprentissage de caractéristiques des communications d'IM. Les caractéristiques qui peuvent être utilisées sont :
- le nombre moyen de messages dans une communication ;
- la durée moyenne d'une communication ;
- le sens des messages (pour observer les inversions des rôles émetteur/récepteur au fur et à mesure de la communication) ;
- la taille des messages échangés (en octets) ;
- le temps écoulé entre des messages consécutifs.

La première étape dans la construction d'un tel modèle par apprentissage consiste à se donner une base d'entraînement. Pour cela on crée des exemples positifs d'une part et des exemples négatifs d'autre part. Les exemples positifs sont des enregistrements de caractéristiques de communications qui correspondent à une fin de communication (par exemple « a bientôt », « bye »...). Un tel enregistrement sera marqué comme correspondant à une fin de communication dans le modèle.

Les exemples négatifs sont construits identiquement sauf que les caractéristiques ne correspondent pas à des fins de communications. Les enregistrements associés aux exemples négatifs dans le modèle d'apprentissage sont donc marqués comme ne correspondant pas à une fin de communication. Un tel exemple négatif peut être « je reviens dans 2 minutes » ou « attends ». Ces messages indiquent clairement que la conversation n'est pas terminée.

La phase suivante consiste à appliquer une technique ou un algorithme d'apprentissage. Suivant les caractéristiques considérées pour l'apprentissage on pourra utiliser des arbres de décision (e.g. algorithme J48), des réseaux de neurones, des réseaux bayésiens ou encore des machines à support de vecteur (SVM).

L'homme du métier saura mettre en oeuvre des techniques de construction de modèles et d'apprentissage en fonction des techniques qu'il souhaite utiliser à cette fin. Il n'est pas nécessaire, pour la bonne compréhension de l'invention de décrire ces techniques plus avant.

Le modèle créé doit ensuite être testé. Un autre ensemble d'exemples peut alors être crée à cet effet. Il est également possible de réserver une partie de la base d'entraînement aux tests.

Les résultats des tests s'expriment en termes de précision et de rappel. La précision rend compte des erreurs de prédiction. Il s'agit de prendre en compte les erreurs commises lors de la reconnaissance pour les intégrer ces erreurs au modèle et au besoin marquer certains exemples comme étant « négatifs ». Les rappels permettent d'intégrer des oublis du modèle.

Encore une fois, l'homme du métier saura utiliser, en fonction des moyens dont il dispose, telle ou telle technique de test des modèles adaptés aux conditions de mise en oeuvre de l'invention.

Selon les méthodes et paramètres d'apprentissage utilisés on peut privilégier une propriété du modèle au détriment d'une autre. Suivant le public vis-à-vis duquel l'invention doit être mise en oeuvre, on pourra privilégier une propriété du modèle plutôt qu'une autre.

En effet, les usages de messagerie instantanée sont susceptibles de varier du grand public au monde de l'entreprise. De même dans le domaine des entreprises des changements d'usage sont à prévoir selon qu'on s'intéresse à un public technophile ou technophobe. On peut donc envisager de construire un modèle de fin de communication de messagerie instantanée par population utilisatrice de l'invention.

Un modèle ainsi construit qui est jugé suffisamment performant dans son contexte d'utilisation peut ensuite être appliqué à la prédiction de fin de communications. Les caractéristiques de la communication (avec le même formalisme que celui adopté pour l'élaboration du modèle) sont capturées en temps réel et confrontées au modèle d'apprentissage préalablement construit.

On détecte alors s'il s'agit d'après le modèle d'une fin de communication IM ou non, ainsi qu'un taux de confiance dans la prédiction, c'est-à-dire une probabilité que la fin de la communication survienne ou soit survenue.

### 5.4 Déclenchement de service de détection de fin de communication et contrôle de l'envoi d'un message au terminal de l'utilisateur

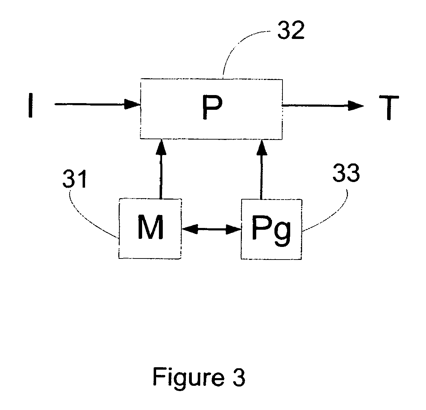

Dans le mode de réalisation décrit en relation avec les figures 2 et 3, le module de prédiction (préalablement décrit, voir 5.3) se charge de transmettre les informations de fin de communication de messagerie instantanée à un module de prise de décision et d'envoi de messages. C'est ce dernier module qui prend la décision finale d'envoyer tel message ou non car suivant sa nature (alerte de sécurité, publicité, etc.) on se satisfera d'un taux de confiance plus ou moins élevé.

Les informations suivantes sont donc transmises du module de prédiction au module de prise de décision et d'envoi des messages :
- l'identifiant de l'utilisateur jugé disponible par le module de prédiction (comme par exemple son adresse sur la plateforme de messagerie instantanée) ;
- la date et heure de début de sa disponibilité (si l'on tarde trop à envoyer l'information l'utilisateur va probablement commencer une nouvelle activité) ;
- un taux de confiance dans la disponibilité (c'est le résultat du calcul de la probabilité de fin de communication) ;
- toute autre information jugée utile (telle que par exemple un identifiant d'un système d'exploitation ou d'une version de l'application de messagerie instantanée utilisée).

Il est bien entendu que dans ce mode de réalisation de l'invention les différents modules de l'invention ne sont pas nécessairement situés sur la même machine physique. Il faut donc pouvoir assurer, suivant les implémentations, une transmission de ces informations sur le réseau, et éventuellement de manière sécurisée.

L'envoi de l'information à l'utilisateur peut être réalisé en utilisant plusieurs techniques. Les techniques utilisées ne présentent cependant pas les mêmes contraintes ni les mêmes difficultés.

La première et la plus pratique consiste à utiliser le canal de messagerie instantanée de l'utilisateur. On propose pour cela à l'utilisateur de s'inscrire au service. A cette occasion il peut s'il le souhaite préciser ses préférences thématiques. L'inscription au service a pour effet d'ajouter un utilisateur virtuel aux contacts de l'utilisateur. C'est ce contact virtuel qui enverra les informations sous forme de messages instantanés. Ces messages instantanés pourront comporter des mots clefs ou des images et le cas échéant une adresse Internet (par exemple sou la forme d'une « URL ») vers le contenu détaillé de l'information.

La date de consultation de la page web associée (ou sa non consultation) comparée à la date d'émission du message instantané permet de contrôler la pertinence du dispositif. Si la page n'est pas consultée ou tardivement c'est que le moment de supposée disponibilité n'en était pas un ou que la thématique de l'information proposée ne plaisait pas à l'utilisateur. Par des techniques classiques d'extraction de connaissance à partir de données ("data mining" en anglais) on peut ainsi améliorer la connaissance qu'on a de l'utilisateur et donc affiner, automatiquement ou manuellement par la suite, le contenu des futures recommandations.

On peut également installer sur le poste client une interface qui offrira davantage de possibilités (comme la personnalisation du service).

### 5.5 Autres caractéristiques optionnelles et avantages

On présente, en relation avec la figure 3, un mode de réalisation d'un dispositif de transmission de message selon l'invention.

Un tel dispositif comprend une mémoire 31 constituée d'une mémoire tampon, une unité de traitement 32, équipée par exemple d'un microprocesseur P, et pilotée par le programme d'ordinateur 33, mettant en oeuvre le procédé de contrôle selon l'invention.

A l'initialisation, les instructions de code du programme d'ordinateur 33 sont par exemple chargées dans une mémoire RAM avant d'être exécutées par le processeur de l'unité de traitement 32. L'unité de traitement 32 reçoit en entrée (I) un ensemble de messages constituant une conversation entre des utilisateurs. Le microprocesseur de l'unité de traitement 32 met en oeuvre les étapes du procédé décrit précédemment, selon les instructions du programme d'ordinateur 33, pour déterminer la probabilité que le message en cours d'analyse soit le dernier de la communication entre l'utilisateur A et B. Pour cela, le moteur comprend, outre la mémoire tampon 31, des moyens d'analyse des messages et des moyens de calcul de la probabilité de fin de message. Il comprend également des moyens de fourniture d'un message comprenant l'information à transmettre (T) à l'utilisateur. Ces moyens sont pilotés par le microprocesseur de l'unité de traitement 32.

## Revendications

1. Procédé de transmission d'un message par une entité d'un réseau de communication et à destination d'au moins un terminal d'un utilisateur caractérisé en ce du'il comprend :
- une étape d'analyse d'un ensemble de messages échangés dans une communication, ladite étape d'analyse délivrant au moins une information représentative d'une probabilité d'interruption de ladite communication ;
- une étape de délivrance dudit message audit terminal, si ladite probabilité est supérieure à un seuil prédéterminé.

2. Procédé selon la revendication 1 **caractérisé en ce que** ladite étape de délivrance tient compte également d'une information représentative d'un niveau de criticité dudit message.

3. Procédé selon l'une quelconque des revendications 1 à 2, **caractérisé en ce que** ladite étape d'analyse comprend :
- une étape d'obtention d'un ensemble d'informations représentatives d'au moins une séquence de messages échangés par ledit utilisateur dans ladite communication ;
- une étape d'analyse probabiliste desdites informations par comparaison avec au moins un modèle probabiliste de détection d'interruption de communication, de façon à obtenir ladite au moins une probabilité d'interruption de ladite communication.

4. Procédé selon la revendication 3, **caractérisé en ce que** ledit au moins un modèle probabiliste tient compte d'au moins un paramètre appartenant au groupe comprenant au moins :
- un nombre moyens de messages échangés lors d'une communication ;
- une durée moyenne d'une communication ;
- un sens des messages d'une communication ;
- une évolution de la taille des messages échangés en cours de communication ;
- un temps écoulé entre deux messages d'une communication.

5. Procédé selon l'une quelconque des revendications 1 à 4, **caractérisé en ce que** ladite étape de délivrance est mise en oeuvre par l'intermédiaire d'une application de messagerie instantanée et **en ce que** ledit message se présente sous la forme d'un message instantané.

6. Dispositif de transmission d'un message par une entité d'un réseau de communication et à destination d'au moins un terminal d'un utilisateur **caractérisé en ce qu'**il comprend :
- des moyens d'analyse d'un ensemble de messages échangés dans une de communication, lesdits moyens d'analyse délivrant au moins une information représentative d'une probabilité d'interruption de ladite communication ;
- des moyens de délivrance dudit message audit terminal, si ladite probabilité est supérieure à un seuil prédéterminé.

7. Système de transmission d'un message vers un utilisateur d'un terminal, en provenance d'une entité d'un réseau de communication, **caractérisé en ce qu'**il comprend :
- des moyens d'analyse d'un ensemble de messages échangés dans une de communication, lesdits moyens d'analyse délivrant au moins une information représentative d'une probabilité d'interruption de ladite communication ;
- des moyens de délivrance dudit message audit terminal, si ladite probabilité est supérieure à un seuil prédéterminé.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de transmission d'un message selon l'une au moins des revendications 1 à 5, lorsqu'il est exécuté sur un ordinateur.

## Claims

1. Method for transmitting a message by an entity of a communication network and destined for at least one terminal of a user **characterized in that** it comprises:
a step of analysing a set of messages exchanged in a communication, said analysis step delivering at least one item of information representative of a probability of interruption of said communication;
a step of delivering said message to said terminal, if said probability is greater than a predetermined threshold.

2. Method according to Claim 1, **characterized in that** said delivery step takes account also of an item of information representative of a criticality level of said message.

3. Method according to any one of Claims 1 to 2, **characterized in that** said analysis step comprises:
a step of obtaining a set of information representative of at least one sequence of messages exchanged by said user in said communication;
a step of probabilistic analysis of said information by comparison with at least one probabilistic model of detecting interruption of communication, so as to obtain said at least one probability of interruption of said communication.

4. Method according to Claim 3, **characterized in that** said at least one probabilistic model takes account of at least one parameter belonging to the group comprising at least:
a mean number of messages exchanged during a communication;
a mean duration of a communication;
a direction of the messages of a communication;
an evolution of the size of the messages exchanged during communication;
a time elapsed between two messages of a communication.

5. Method according to any one of Claims 1 to 4, **characterized in that** said delivery step is implemented by way of an instantaneous messaging application and **in that** said message takes the form of an instantaneous message.

6. Device for transmitting a message by an entity of a communication network and destined for at least one terminal of a user **characterized in that** it comprises:
means for analysing a set of messages exchanged in a communication, said analysis means delivering at least one item of information representative of a probability of interruption of said communication;
means for delivering said message to said terminal, if said probability is greater than a predetermined threshold.

7. System for transmitting a message to a user of a terminal, originating from an entity of a communication network, **characterized in that** it comprises:
means for analysing a set of messages exchanged in a communication, said analysis means delivering at least one item of information representative of a probability of interruption of said communication;
means for delivering said message to said terminal, if said probability is greater than a predetermined threshold.

8. Computer program product downloadable from a communication network and/or stored on a medium readable by computer and/or executable by a microprocessor, **characterized in that** it comprises program code instructions for the execution of the method for transmitting a message according to at least one of Claims 1 to 5, when it is executed on a computer.

## Patentansprüche

1. Verfahren zur Übertragung einer Mitteilung durch eine Entität eines Kommunikationsnetzes und an mindestens ein Endgerät eines Benutzers, **dadurch gekennzeichnet, dass** es enthält:
- einen Schritt der Analyse einer Einheit von Mitteilungen, die in einer Kommunikation ausgetauscht werden, wobei der Analyseschritt mindestens eine Information liefert, die für eine Unterbrechungswahrscheinlichkeit der Kommunikation repräsentativ ist;
- einen Schritt der Lieferung der Mitteilung an das Endgerät, wenn die Wahrscheinlichkeit höher ist als eine vorbestimmte Schwelle.

2. Verfahren nach Anspruch 1, **dadurch gekennzeichnet, dass** der Lieferungsschritt ebenfalls eine Information berücksichtigt, die für einen Pegel der Kritizität der Mitteilung repräsentativ ist.

3. Verfahren nach einem der Ansprüche 1 bis 2, **dadurch gekennzeichnet, dass** der Analyseschritt enthält:
- einen Schritt des Erhalts einer Einheit von Informationen, die für mindestens eine Folge von Mitteilungen repräsentativ ist, die vom Benutzer bei der Kommunikation ausgetauscht werden;
- einen Schritt der Wahrscheinlichkeitsanalyse der Informationen durch Vergleich mit mindestens einem Wahrscheinlichkeitsmodell der Erfassung einer Kommunikationsunterbrechung, um die mindestens eine Unterbrechungswahrscheinlichkeit der Kommunikation zu erhalten.

4. Verfahren nach Anspruch 3, **dadurch gekennzeichnet, dass** das mindestens eine Wahrscheinlichkeitsmodell mindestens einen Parameter berücksichtigt, der zu der Gruppe gehört, die mindestens enthält:
- eine mittlere Anzahl von während einer Kommunikation ausgetauschten Mitteilungen;
- eine mittlere Dauer einer Kommunikation;
- eine Richtung der Mitteilungen einer Kommunikation;
- eine Entwicklung der Größe der während der Kommunikation ausgetauschten Mitteilungen;
- eine zwischen zwei Mitteilungen einer Kommunikation vergangene Zeit.

5. Verfahren nach einem der Ansprüche 1 bis 4, **dadurch gekennzeichnet, dass** der Schritt des Lieferns mittels einer Anwendung einer sofortigen Mitteilungsübermittlung durchgeführt wird, und dass die Mitteilung in Form einer Sofortmitteilung vorliegt.

6. Vorrichtung zur Übertragung einer Mitteilung durch eine Entität eines Kommunikationsnetzes und an mindestens ein Endgerät eines Benutzers, **dadurch gekennzeichnet, dass** sie enthält:
- Einrichtungen zur Analyse einer Einheit von in einer Kommunikation ausgetauschten Mitteilungen, wobei die Analyseeinrichtungen mindestens eine Information liefern, die für eine Unterbrechungswahrscheinlichkeit der Kommunikation repräsentativ ist;
- Einrichtungen zum Liefern der Mitteilung an das Endgerät, wenn die Wahrscheinlichkeit höher ist als eine vorbestimmte Schwelle.

7. System zur Übertragung einer Mitteilung an einen Benutzer eines Endgeräts, die von einer Entität eines Kommunikationsnetzes kommt, **dadurch gekennzeichnet, dass** es enthält:
- Einrichtungen zur Analyse einer Einheit von in einer Kommunikation ausgetauschten Mitteilungen, wobei die Analyseeinrichtungen mindestens eine Information liefern, die für eine Unterbrechungswahrscheinlichkeit der Kommunikation repräsentativ ist;
- Einrichtungen zum Liefern der Mitteilung an das Endgerät, wenn die Wahrscheinlichkeit höher ist als eine vorbestimmte Schwelle.

8. Computerprogrammprodukt, das von einem Kommunikationsnetz heruntergeladen und/oder auf einem computerlesbaren Träger gespeichert und/oder von einem Mikroprozessor ausgeführt werden kann, **dadurch gekennzeichnet, dass** es Programmcodeanweisungen für die Ausführung des Verfahrens zur Übertragung einer Mitteilung nach mindestens einem der Ansprüche 1 bis 5 enthält, wenn es auf einem Computer ausgeführt wird.
